# EUROPÄISCHE PATENTSCHRIFT

(11) **EP 0 921 977 B1**
(45) Veröffentlichungstag und Bekanntmachung des Hinweises auf die Patenterteilung: **21.11.2001**
(21) Anmeldenummer: 98938656.0
(22) Anmeldetag: 26.06.1998
(51) Int. Cl.: B62D 53/08

(54) **SATTELKUPPLUNG**
TRACTOR SEAT
SELLETTE DE TRACTEUR

(30) Priorität: 27.06.1997 DE 19727338
(43) Veröffentlichungstag der Anmeldung: 16.06.1999
(73) Patentinhaber: Jost-Werke GmbH & Co. KG, 60528 Frankfurt am Main (DE)
(72) Erfinder: KOETTER, Stefan, D-64546 Mörfelden-Walldorf (DE); POHL, Wolfang, D-63303 Dreieich (DE); SPITZ, Rainer, D-65347 Eltville (DE); ALGÜERA GALLEGO, José Manuel, D-63739 Aschaffenburg (DE)
(74) Vertreter: Fuchs Mehler Weiss & Fritzsche
(86) Internationale Anmeldenummer: EP9803916
(87) Internationale Veröffentlichungsnummer: WO9900288

(56) Entgegenhaltungen:
- US-A- 2 438 323
- US-A- 5 509 682

## Beschreibung

Die Erfindung betrifft eine Sattelkupplung für ein Last-Kraftfahrzeug, mit einer Kupplungsplatte und mit Mitteln zum Befestigen der Sattelkupplung am Fahrzeugrahmen in Form von zwei Lagerzapfen, die seitlich an zwei diametral gegenüberliegenden Stellen unterhalb der Oberseite der Kupplungsplatte an der Sattelkupplung ausgebildet sind und über die Kupplungsplatte seitlich nach außen vorstehen. und die einen Lagerabschnitt und einen Befestigunesabschnitt aufweisen.

Sattelkupplungen sind in Lagerböcken, die entweder integraler Bestandteil des Fahrzeugrahmens sind oder auf dem Fahrzeugrahmen aufgeschraubt sind, um eine horizontale Achse schwenkbar gelagert. Die Verbindung der Lagerböcke mit der Sattelkupplung erfolgt über Bolzen, die in die Lagerböcke und in entsprechende Öffnungen der Kupplungsplatte eingesteckt werden. Lagerböcke. die auf dem Fahrzeugrahmen befestigt sind oder integrale Bestandteile des Fahrzeugrahmens sind, sind beispielsweise aus der EP 00 87 903 B1 und der DE 43 22 717 A1 bekannt. Diese Lagerböcke besitzen jeweils ein Lagerrohr. durch die der Lagerbolzen eingesteckt werden kann.

Ferner gibt es Sattelkupplungen, die unterhalb der Kupplungsplatte Taschen mit eingelegten Gummilagern aufweisen. Auch hier erfolgt die Befestigung mit den Lagerböcken über Lagerstifte, die in die Seitenwände der Taschen und durch den Lagerbock gesteckt werden. Derartige Anordnungen sind aus der DE-PS 23 03 163, DE 30 40 925 C2, EP 0 038 928, EP 0 114 046 und der DE-PS 14 30 462 bekannt.

Allen Lösungen ist der Nachteil gemeinsam, daß bei der Montage die Sattelkupplung exakt zum Rahmen und somit zu den Öffnungen der Lagerböcke ausgerichtet werden muß, bevor die Lagerbolzen eingesteckt werden können Dies erfordert einen erheblichen Montageaufwand. Ein weiterer Nachteil ergibt sich aus den Fertigungstoleranzen des Fahrzeugrahmens. Die Rahmenteile und damit der Abstand der Lagerböcke kann nämlich unterschiedlich groß sein, so daß nicht immer eine stabile Befestigung der Sattelkupplung erzielt werden kann, ohne zusätzliche Maßnahmen zu ergreifen.

Die Nachteile dieser bekannten Konzeption mit den durchgesteckten Lagerbolzen bzw. Lagerstiften werden durch die eingangs bezeichnete Sattelkupplung mit den unmittelbar an der Sattelkupplung an beiden Seiten angebrachten Lagerzapfen vermieden, die jeweils einen Lagerabschnitt und einen Befestigungsabschnitt aufweisen. Der Lagerabschnitt ist derjenige Teil des Lagerzapfens, der im Lagerbock aufliegt. Der Befestiaungsabschnitt hingegen ist für die Anbringung an der Sattelkupplung verantwortlich.

Diese Konzeption ist beispielsweise durch die gattungsbildende DE 28 36 703 A 1 und die US 3,198,548 bekannt geworden.

Durch diese bekannte Konzeption wird die Montage erheblich erleichtert und damit die Montagezeit verkürzt. Die Sattelkupplung wird von oben auf den Fahrzeugrahmen abgesenkt. wobei die Lagerzapfen in die Aufnahmen des am Fahrzeugrahmen angebrachten Lagerbocks eingreifen. Hierbei justiert sich die Sattelkupplung von selbst, ohne daß zusätzliche Maßnahmen ergriffen werden müssen. Anschließend werden die Lagerzapfen mittels eines entsprechenden Befestigungsmittels, auf das im Zusammenhang mit dem Lagerbock noch eingegangen wird, auf dem Lagerbock fixiert.

Des weiteren können Fertigungstoleranzen des Fahrzeugrahmens ausgeglichen werden. Die Lagerzapfen können mit Überlängen gefertigt werden, so daß auch bei zu großem Rahmenabstand noch eine sichere Befestigung auf dem Lagerbock des Fahrzeugrahmens gewährleistet werden kann. Wenn bei normalem Rahmenabstand die Lagerzapfen dann gegenüber dem Lagerbock geringfügig nach außen vorstehen sollten, kann dies in Kauf genommen werden.

Bei einer derartigen Lagerung der Sattelkupplung kommt der Befestigung der beiden Lagerzapfen an der Kupplungsplatte eine besondere Bedeutung bei. da über sie die Kräfte geleitet werden müssen. die betrieblich von der Sattelkupplungsplatte ausgehen und in den Fahrzeugrahmen abgeleitet werden.

Bei den bekannten Sattelkupplungen sind daher die Lagerzapfen einstückig (stoffschlüssig) mit der Sattelkupplung verbunden, insbesondere, wie in der US-Schrift konkret ausgeführt, angeschweißt.

Diese Befestigungsart hat den wesentlichen Nachteil. daß für Anwendungen. die für die gleiche Sattelkupplungsplatte unterschiedliche Lagerbolzen erfordern, jeweils komplette Sattelkupplungsplatten mit den entsprechenden Lagerbolzen bereit- gehalten werden müssen. Dieser Umstand erhöht den logistischen Aufwand, verteuert insbesondere die Lagerhaltung und verhindert auch ein Baukastensystem.

Der Erfindung liegt die Aufgabe zugrunde, die eingangs bezeichnete Sattelkupplung so auszubilden. daß auf einfache und dennoch sichere Weise die Sattelkupplung an verschiedene Anwendungen angepaßt werden kann.

Die Lösung dieser Aufgabe gelingt gemäß der Erfindung dadurch, daß jeder Lagerzapfen lösbar an mindestens zwei Stellen an der Sattelkupplung befestigt ist.

Die lösbar befestigten Lagerzapfen haben den Vorteil, daß die Sattelkupplung durch einfachen Austausch der Lagerzapfen an unterschiedliche Einbaugegebenheiten, wie z.B. unterschiedliche Rahmenabstände, angepaßt werden kann, unter Verwendung der jeweils gleichen Kupplungsplatte.

Die sichere Befestigung des Lagerzapfens im Hinblick auf die auftretenden Kräfte wird dadurch gewährleistet, daß der Lagerzapfen an mindestens zwei Stellen an der Sattelkupplung befestigt ist. Vorzugsweise ist gemäß einer Weiterbildung der Erfindung der Befestigungsabschnitt an seiner Stirnseite mit der Sattelkupplung verschraubt und an seinem dem Lagerabschnitt benachbarten Ende zusätzlich in der Sattelkupplung gehaltert.

Um eine tiefe Einbaulage der Sattelkupplung zu realisieren, können gemäß einer Ausgestaltung der Erfindung der Befestigungsabschnitt und der Lagerabschnitt des Lagerzapfens versetzt zueinander angeordnet sein. Dadurch eröffnet sich auch die Möglichkeit, den Befestigungsabschnitt an der Stelle der Sattelkupplung zu befestigen, wo eine entsprechende Stabilität vorhanden ist.

Die Lagerzapfen können eine zylindrische Form aufweisen. Andere Ausgestaltungen sind ebenfalls möglich, wobei eine Anpassung an die verwendeten Lagerböcke vorgenommen werden muß.

Vorzugsweise trägt der Lagerzapfen eine Buchse, die aus einem Kunststoffmaterial bestehen kann, das besonders gute Gleiteigenschaften aufweist. Vorzugsweise werden Buchsenmaterial und Zapfenmaterial im Hinblick auf eine gute Gleitpaarung aufeinander abgestimmt.

Gemäß einer weiteren Ausführungsform kann die Buchse an ihrer Außenseite eine Gummieinlage tragen, wodurch eine elastische Lagerung geschaffen wird. Bei der Befestigung des Lagerzapfens wird die Gummieinlage zusammengedrückt, wodurch der Lagerzapfen eingespannt wird. Auch mit dieser Ausführungsform können Fertigungstoleranzen ausgeglichen werden. Die Buchse mit der Gummieinlage kann ebenfalls am Lagerzapfen vormontiert sein.

Der Lagerzapfen kann auch ein kalottenförmiges oder kugelförmiges Fließpreßteil tragen, das mit einem entsprechenden Gegenstück in der Lagerstelle zusammenwirkt.

Gemäß einer weiteren Ausführungsform kann der Lagerzapfen eine runde Stirnfläche aufweisen, was den Vorteil hat, daß kein zusätzliches Fließpreßteil benötigt wird, da der Lagerzapfen entsprechend dem Gegenstück der Lagerstelle ausgeprägt ist.

Ferner eignet sich die kugelförmige Lagerung gut zum Kompensieren der Verwindungen des Fahrzeugrahmens.

Der auf dem Fahrzeugrahmen angebrachte, für die Aufnahme der erfindungsgemäßen Stattelkupplung vorgesehene Lagerbock ist dadurch gekennzeichnet, daß er ein Unterteil mit einer an der Oberseite befindlichen Ausnehmung und mindestens ein auf dem Unterteil lösbar befestigtes Halteelement aufweist. Die Ausnehmung ist vorzugsweise an die Gestalt des Lagerzapfens der Sattelkuppiung angepaßt, damit eine Schwenklagerung erzielt wird. Die Ausnehmung ist daher vorzugsweise halbkreisförmig ausgebildet.

Die Ausnehmung kann auch eine andere Ausgestaltung aufweisen, wenn beispielsweise der Lagerzapfen der Sattelkupplung von einem elastischen Material umgeben ist, das eine begrenzte Verschwenkbarkeit der Sattelkupplung zuläßt.

Zur Befestigung des Lagerzapfens kann das Halteelement eine Halbschelle sein, die nach der Montage der Sattelkupplung auf den Lagerzapfen aufgesetzt wird und auf dem Unterteil des Lagerbocks befestigt wird.

Gemäß einer weiteren Ausführungsform kann das Halteelement eine den Lagerzapfen umgreifende Lagerkappe sein, die bei der Montage auf dem Lagerbock befestigt wird. Die Lagerkappe weist vorzugsweise eine Innenkontur auf, die an die Gestalt des Lagerzapfens angepaßt ist. Die Außenkontur der Lagerkappe ist an die Ausnehmung des Lagerbocks angepaßt. so daß eine formschlüssige Verbindung mit dem Lagerbock geschaffen werden kann.

Die Lagerkappe, die ebenfalls vormontiert werden kann. kann eine Buchse mit einer kalotten- oder kugelförmigen Fläche tragen, die mit dem kalotten- oder kugelförmigen Fließpreßteil des Zapfens zusammenwirkt.

Beispielhafte Ausführungsformen der Erfindung werden nachfolgend anhand der Zeichnungen näher erläutert.

Es zeigen:
- Fig. 1: eine Draufsicht auf eine am Fahrzeugrahmen montierte Sattelkupplung,
- Fig. 2: einen Schnitt durch die in Fig. 1 gezeigte Anordnung längs der Linie II-II,
- Fig. 3: eine Seitenansicht eines Lagerbocks,
- Fig. 4: die Draufsicht auf eine Sattelkuppung teilweise im Schnitt gemäß einer weiteren Ausführungsform,
- Fig. 5: eine Seitenansicht eines Lagerbocks gemäß einer weiteren Ausführungsform,
- Fig. 6: einen Vertikalschnitt durch einen Lagerbock gemäß einer weiteren Ausführungsform,
- Fig. 7: eine Draufsicht auf eine Sattelkupplung gemäß einer weiteren Ausführungsform, und
- Fig. 8: die Seitenansicht eines Lagerzapfens.

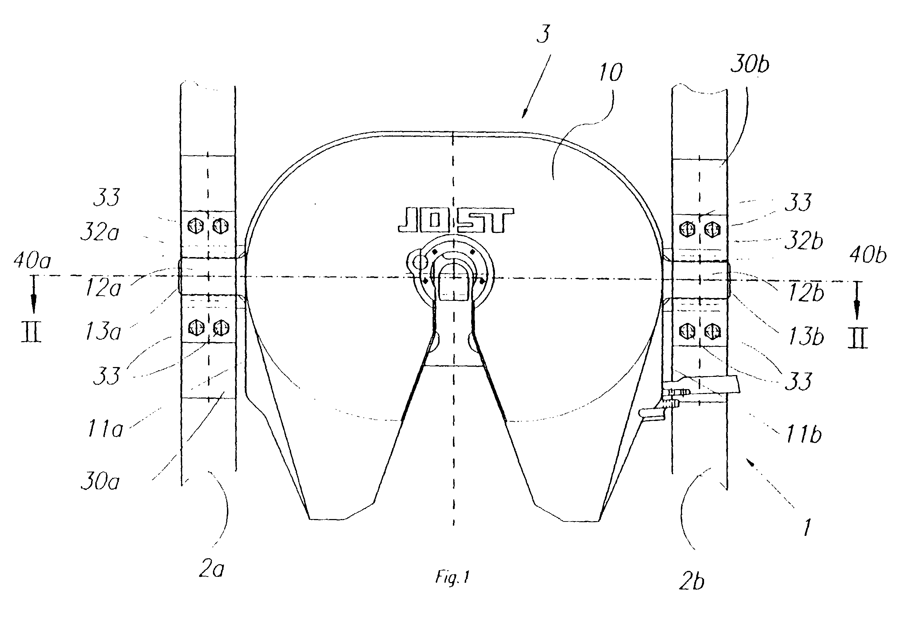

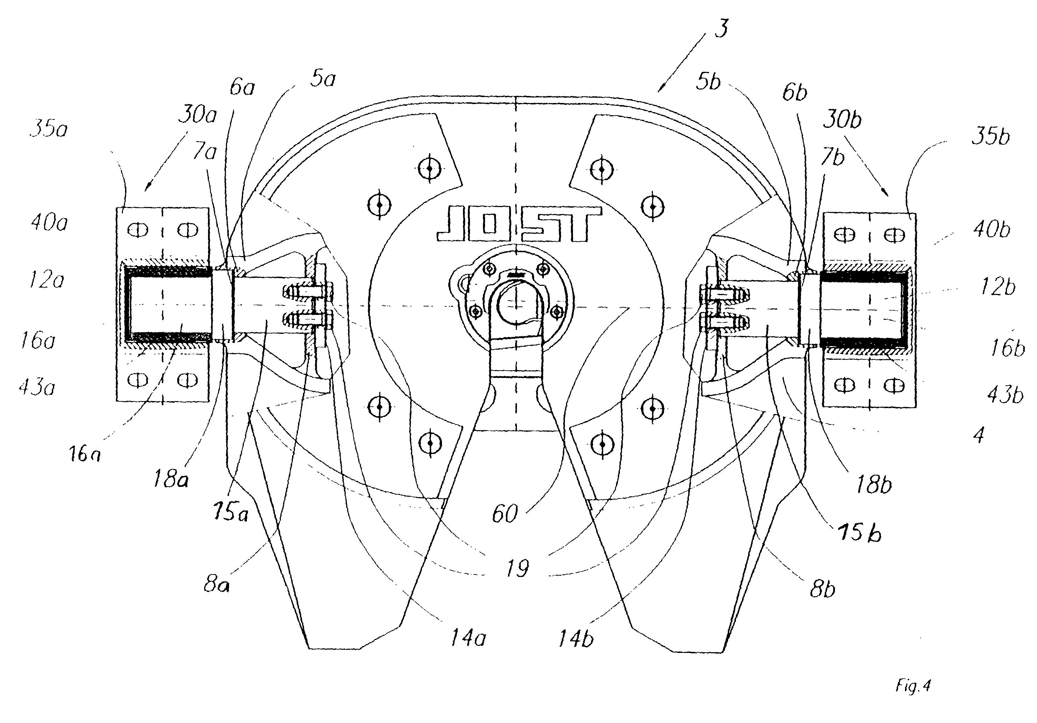

In der Fig. 1 ist eine Sattelkupplung 3 in Draufsicht dargestellt, von der im wesentlichen die Kupplungsplatte 10 zu sehen ist. An den gegenüberliegenden Seitenflächen 11a und 11b sind nach außen vorstehende Lagerzapfen 12a,b lösbar angebracht, die in der hier gezeigten Ausgestaltung zylinderförmig ausgebildet sind. Die Lagerzapfen 12a,b liegen auf Lagerböcken 30a,b auf, die auf Längsträgern 2a,b eines Fahrzeugrahmens 1 montiert sind. Die Lagerböcke 30a,b weisen in ihrem Unterteil 31 jeweils eine Ausnehmung 34 auf, in die der Lagerzapfen 12a,b bei der Montage eingreift (siehe Fig. 3). Die Lagerzapfen 12a,b werden gemäß der in Fig. 3 gezeigten Ausführungsform mittels einer Halbschelle 32a,b befestigt, die das Oberteil des Lagerbocks 30a,b bildet. Mittels Schrauben 33 wird die Halbschelle 32a,b auf dem Unterteil 31 des Lagerbocks 30a,b befestigt.

Wie in der Fig. 1 zu sehen ist, ist die Länge der Lagerzapfen 12a,b an die Breite der Längsträger 2a,b und somit an die Länge der Ausnehmungen 34 des Lagerbocks angepaßt. In der Darstellung der Fig. 1 stehen die Lagerzapfen 12a,b geringfügig mit ihren Stirnflächen 13a,b gegenüber der Außenseite des Lagerbocks 30a,b nach außen vor. Fertigungstoleranzen, wie z.B. unterschiedliche Abstände der Längsträger 2a,b werden durch die Lagerzapfen 12a,b insofern ausgeglichen, als diese dann möglicherweise nicht über die gesamte Länge der Ausnehmungen 34a,b aufliegen. Umgekehrt kann es möglich sein, die Lagerzapfen 12a,b länger auszubilden, als die Lagerböcke breit bzw. deren Ausnehmungen 34 lang sind. In diesem Fall würden die Lagerzapfen 12a,b deutlich gegenüber den Lagerböcken 30a,b nach außen vorstehen.

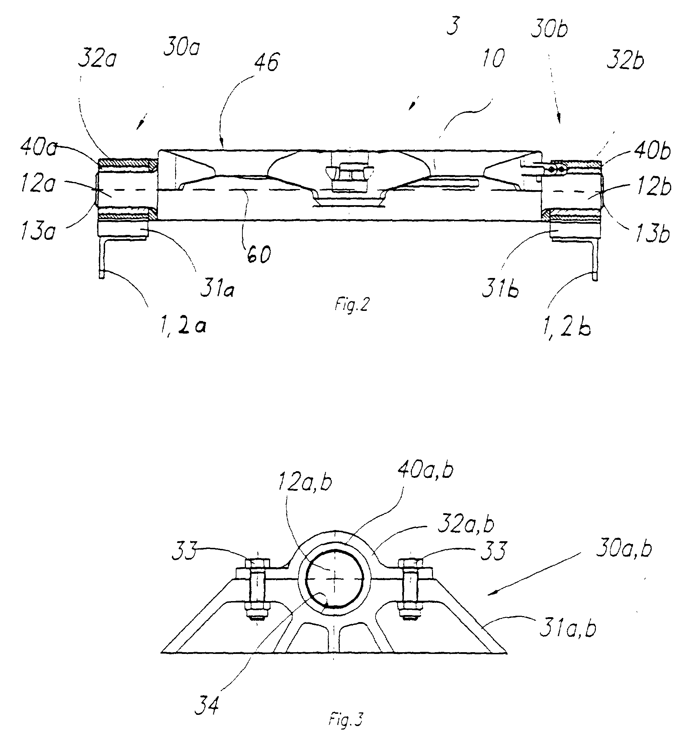

In der Fig. 2 ist ein Schnitt längs der Linie II-II der in Fig. 1 gezeigten Anordnung dargestellt. Es ist deutlich zu sehen, daß die Lagerböcke 12a,b nur geringfügig unterhalb der Oberseite 46 der Kupplungsplatte 10 angeordnet sind. Dadurch wird eine tiefe Einbaulage der Sattelkupplung 3 erreicht.

In den Fign. 1 bis 3 ist zu sehen, daß die Lagerzapfen 12a,b Buchsen 40a,b tragen, die als Lagerbuchsen ausgebildet sein können. Vorzugsweise wird ein Kunststoffmaterial verwendet, das bezüglich des Zapfenmaterials gute Gleiteigenschaften aufweist, so daß die Verschwenkbarkeit der Sattelkupplung 3 um die horizontale Achse 60 gewährleistet ist.

In der Fig. 4 ist eine weitere Ausführungsform einer Sattelkupplung 3 dargestellt. die ebenfalls lösbar befestigte Lagerzapfen 12a,b aufweist, wobei durch die zum Teil weggebrochene Darstellung die Befestigung sichtbar ist. Die Lagerzapfen 12a,b weisen einen Lagerabschnitt 16a,b auf, der auf dem Lagerbock 30a,b aufliegt und die Buchse 40a,b trägt. In der hier gezeigten Ausführungsform weisen die Buchsen 40a,b an ihrer Außenseite zusätzlich Gummieinlagen 43a,b auf, die geringfügig gegenüber der Oberfläche der Buchse 40a,b radial nach außen vorstehen. Beim Einbauen werden diese Gummieinlagen zusammengedrückt, so daß eine unverrückbare Fixierung der Lagerbuchse 40a,b erzielt wird, in der die Lagerzapfen 12a,b drehbar gelagert sind.

Der Befestigungsabschnitt 15a,b ragt in die Sattelkupplung 3 hinein. Der Rahmen 4 der Kupplungsplatte 10 besitzt an seiner Außenwand 5a,b eine Öffnung 6a,b, durch die der Lagerzapfen 12a,b hindurchgesteckt wird. Diese Öffnung 6a,b besitzt eine Schulter 7a,b, an der ein an dem Lagerzapfen 12a,b angeformter Bund 18a,b anliegt.

Die hintere Stirnfläche 14 ist mittels Schrauben 19 an einem Steg 8a,b des Rahmens 4 verschraubt. Die Lagerbolzen 12a,b sind somit an zwei Befestigungsstellen an der Sattelkupplung fixiert, so daß die an der Sattelkupplung 3 angreifenden Kräfte in die Lagerböcke 30a,b eingeleitet werden können, ohne daß die Lagerzapfen 12a,b auch in Extremsituationen nennenswert verformt werden.

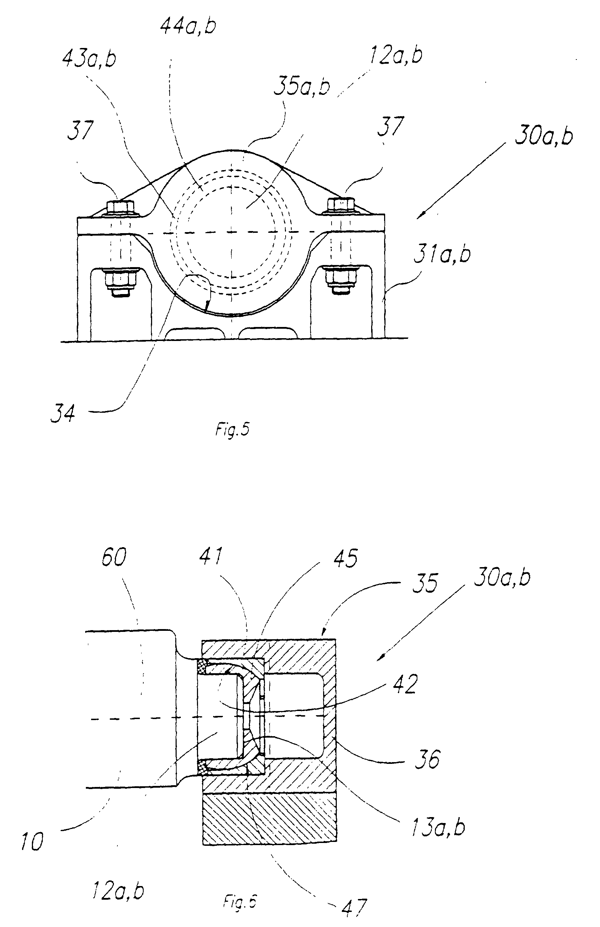

In der Fig. 5 ist die Seitenansicht eines Lagerbocks 30 dargestellt, dessen Unterteil 31 eine halbkreisförmige Ausnehmung 34 aufweist. Das Oberteil des Lagerbocks 30a,b wird durch eine Lagerkappe 35a,b gebildet, deren Außenkontur an die Form der Ausnehmung 34 angepaßt ist. Die Lagerkappe 35a,b umgreift den Lagerzapfen 12a,b und kann somit vormontiert werden. Die Lagerkappe 35a,b wird mittels der Schrauben 37 auf dem Unterteil 31 des Lagerbocks 30a,b befestigt. Der Lagerzapfen 12a,b und die Buchsen 40a,b mit den Einlagen 43a,b sind in der Fig. 5 gestrichelt eingezeichnet.

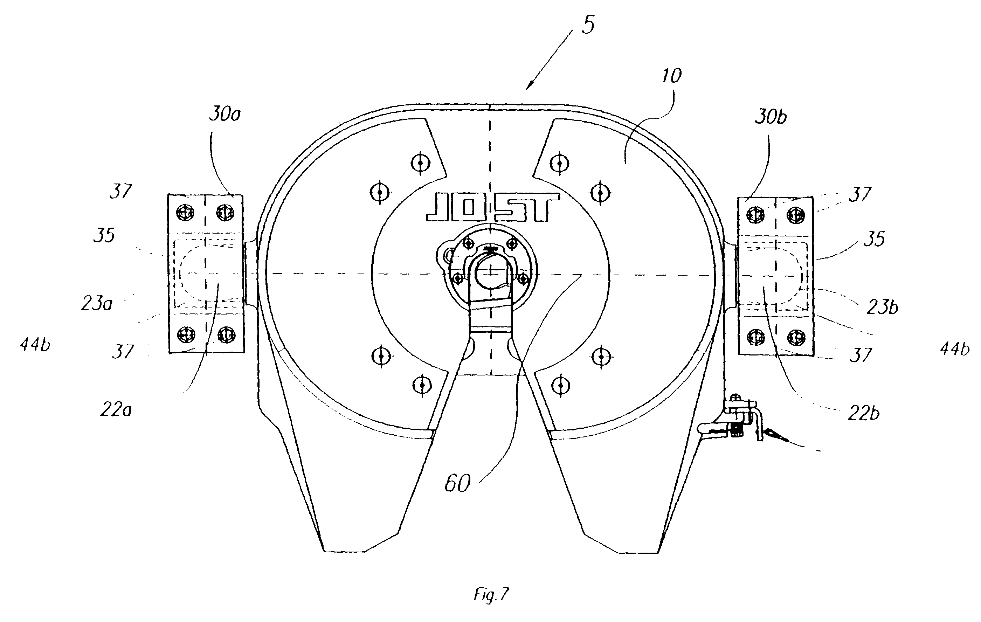

In der Fig. 6 ist ein Schnitt durch einen Lagerbock 30a,b gemäß einer weiteren Ausführungsform dargestellt. Der Lagerzapfen 12b, der eine zylindrische Außenkontur aufweist, trägt ein Fließpreßteil 45. das eine Kalottenfläche 47 aufweist. In der Lagerkappe 35 ist eine Buchse 41 eingesetzt, die ebenfalls eine entsprechende kalottenförmige Innenfläche 42 aufweist. die an die kalottenförmige Fläche 47 angepaßt ist. Fertigungstoleranzen in axialer Richtung (in Richtung der Schwenkachse 60) können dadurch auf einfache Weise kompensiert werden. Hierbei ist darauf zu achten, daß der Lagerbolzen 12b mit seiner Stirnfläche 13b nicht an der Stirnwand 36 der Lagerkappe 35 anliegt.

In der Fig. 7 ist eine weitere Ausführungsform dargestellt, bei der die Lagerzapfen 22a,b einen kreisförmigen Querschnitt aufweisen, der sich in Richtung Kupplungsplatte 10 verjüngt. Die Stirnfläche 23a,b ist abgerundet, so daß sich insgesamt eine tropfenförmige Ausgestaltung der Lagerzapfen 22a,b ergibt. Innerhalb der Lagerkappe 35 ist eine die Lagerzapfen 22a,b umgebende Lagereinsatz 44a,b aus elastischem Material eingesetzt.

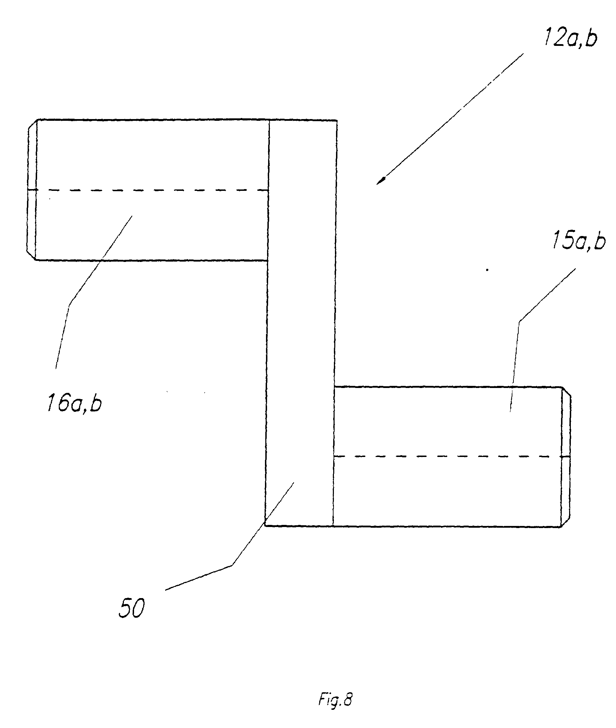

In der Fig. 8 ist eine Ausführungsform eines austauschbaren Lagerzapfens 12a dargestellt, bei dem der Befestigungsabschnitt 15a und der Lagerabschnitt 16a versetzt zueinander angeordnet sind. Die Verbindung wird über einen Mittelabschnitt 50 hergestellt. Diese Ausführungsform ist für die Anwendungsfälle geeignet, in denen die Sattelkupplung möglichst tief im Fahrzeugrahmen 1 angeordnet werden soll.

### Bezugszeichen:

- 1: Fahrzeugrahmen
- 2a,b: Längsträger
- 3: Sattelkupplung
- 4: Rahmen
- 5a,b: Außenrand
- 6a,b: Öffnung
- 7a,b: Schulter
- 8a,b: Steg
- 10: Kupplungsplatte
- 11a,b: Seitenfläche
- 12a,b: Lagerzapfen
- 13a,b: vordere Stirnfläche
- 14: hintere Stirnfläche
- 15a,b: Befestigungsabschnitt
- 16a,b: Lagerabschnitt
- 18a,b: Bund
- 19: Schrauben
- 22a,b: Lagerzapfen
- 23a,b: Stirnfläche
- 30a,b: Lagerbock
- 31: Unterteil
- 32a,b: Halbschelle
- 33: Schraube
- 34: Ausnehmung
- 35a,b: Lagerkappe
- 36: Stirnwand
- 37: Schraube
- 40a,b: Buchse
- 41: Buchse
- 42: Kalottenfläche
- 43a,b: Einlage
- 44a,b: Lagereinsatz
- 45: Fließpreßteil
- 46: Oberseite
- 47: Kalottenfläche
- 50: Mittelabschnitt
- 60: horizontale Achse

## Patentansprüche

1. Sattelkupplung (3) für ein Last-Kraftfahrzeug, mit einer Kupplungsplatte (10) und mit Mitteln zum Befestigen der Sattelkupplung (3) am Fahrzeugrahmen in Form von zwei Lagerzapfen (12 a, b; 23 a, b), die seitlich an zwei diametral gegenüberliegenden Stellen unterhalb der Oberseite der Kupplungsplatte (10) an der Sattelkupplung (3) ausgebildet sind und über die Kupplungsplatte (10) seitlich nach außen vorstehen, und die einen Lagerabschnitt (16 a, b) und einen Befestigungsabschnitt (15 a, b) aufweisen, **dadurch gekennzeichnet, daß** jeder Lagerzapfen (12 a, b, 23 a, b) lösbar an mindestens zwei Stellen an der Sattelkupplung (3) befestigt ist.

2. Sattelkupplung nach Anspruch 1, **dadurch gekennzeichnet, daß** der Befestigungsabschnitt (15 a, b) an seiner freien Stirnfläche (14) mit der Sattelkupplung (3) verschraubt und mindestens an seinem dem Lagerabschnitt (16 a, b) benachbarten Ende zusätzlich in der Sattelkupplung (3) gehalten ist.

3. Sattelkupplung nach Anspruch 1 oder 2, **dadurch gekennzeichnet, daß** der Befestigungsabschnitt (15 a, b) ≥ dem Lagerabschnitt (16 a, b) ist.

4. Sattelkupplung nach Anspruch 1 oder 2, 3, **dadurch gekennzeichnet, daß** der Befestigungsabschnitt (15 a, b) und der Lagerabschnitt (16 a, b) des Lagerzapfens (12 a, b, 23 a, b) versetzt zueinander angeordnet sind.

5. Sattelkupplung nach einem der Ansprüche 1 bis 4, **dadurch gekennzeichnet, daß** die Lagerzapfen (12 a, b, 23 a, b) eine zylindrische Form aufweisen.

6. Sattelkupplung nach einem der Ansprüche 1 bis 5, **dadurch gekennzeichnet, daß** die Lagerzapfen (12 a, b, 23 a, b) eine Buchse (40 a, b, 41) tragen.

7. Sattelkupplung nach einem der Ansprüche 1 bis 5, **dadurch gekennzeichnet, daß** die Lagerzapfen (12 a, b, 23 a, b) ein Fliespreßteil (45) tragen, das eine kalottenförmige oder kugelförmige Oberfläche (47) aufweist.

8. Sattelkupplung nach einem der Ansprüche 1 bis 7, **dadurch gekennzeichnet, daß** die Lagerzapfen (12 a, b, 23 a, b) eine runde Stirnfläche aufweisen.

9. Sattelkupplung nach einem der Ansprüche 1 bis 8, mit je einem Lagerbock zur Aufnahme des zugehörigen Lagerzapfens der Sattelkupplung, **gekennzeichnet durch** die Ausbildung des Lagerbockes **durch**
ein Unterteil (31a,b) mit einer an der Oberseite befindlichen Ausnehmung (34) und mindestens einem auf dem Unterteil (31a,b) lösbar befestigten Halteelement.

10. Sattelkupplung nach Anspruch 8, **dadurch gekennzeichnet, daß** die Ausnehmung (34) halbkreisförmig ist.

11. Sattelkupplung nach Anspruch 8 oder 9, **dadurch gekennzeichnet, daß** das Halteelement eine Halbschelle (32) ist.

12. Sattelkupplung nach Anspruch 8 oder 9, **dadurch gekennzeichnet, daß** das Halteelement eine den Lagerzapfen (12a,b, 23a,b) umgreifende Lagerkappe (35) ist.

13. Sattelkupplung nach Anspruch 11, **dadurch gekennzeichnet, daß** die Innenkontur der Lagerkappe (35) an die Gestalt des Lagerzapfens (12a,b, 23a,b) und die Außenkontur an die Form der Ausnehmung (34) angepaßt sind.

14. Sattelkupplung nach Anspruch 11 oder 12, **dadurch gekennzeichnet, daß** die Lagerkappe (35) eine eingesetzte Buchse (41, 42) mit einer Kalotten- oder Kugelfläche (42) ist.

## Claims

1. Trailer coupling (3) for a heavy motor vehicle, with a coupling plate (10) and with means for attaching the trailer coupling (3) to the vehicle chassis in the form of two journals (12a, b; 23a, b), which are formed laterally on the trailer coupling (3) at two diametrically opposite points beneath the upper side of the coupling plate (10) and project laterally outwards beyond the coupling plate (10), and which have a bearing section (16a, b) and an attachment section (15a, b), **characterised in that** each journal (12a, b, 23a, b) is removably attached to the trailer coupling (3) at at least two points.

2. Trailer coupling according to claim 1, **characterised in that** at its free end face (14) the attachment section (15a, b) is bolted to the trailer coupling (3) and at least at its end adjacent to the bearing section (16a, b) is additionally held in the trailer coupling (3).

3. Trailer coupling according to claim 1 or 2, **characterised in that** the attachment section (15a, b) is ≥ the bearing section (16a, b).

4. Trailer coupling according to claim 1 or 2, 3, **characterised in that** the attachment section (15a, b) and the bearing section (16a, b) of the journal (12a, b, 23a, b) are offset in relation to each another.

5. Trailer coupling according to one of claims 1 to 4, **characterised in that** the journals (12a, b, 23a, b) are of cylindrical form.

6. Trailer coupling according to one of claims 1 to 5, **characterised in that** the journals (12a, b, 23a, b) bear a bush (40a, b, 41).

7. Trailer coupling according to one of claims 1 to 5, **characterised in that** the journals (12a, b, 23a, b) bear an extruded part (45) which has a socket-form or ball-form surface (47).

8. Trailer coupling according to one of claims 1 to 7, **characterised in that** the journals (12a, b, 23a, b) have a round end face.

9. Trailer coupling according to one of claims 1 to 8, with a bearing block to receive each of the associated journals of the trailer coupling, **characterised by** the formation of the bearing block with
a bottom part (31a, b) with a recess (34) provided at the upper surface and at least one retaining element removably attached to the bottom part (31a, b).

10. Trailer coupling according to claim 8, **characterised in that** the recess (34) is semicircular.

11. Trailer coupling according to claim 8 or 9, **characterised in that** the retaining element is a half shell (32).

12. Trailer coupling according to claim 8 or 9, **characterised in that** the retaining element is a bearing cap (35) surrounding the journal (12a, b, 23a, b).

13. Trailer coupling according to claim 11, **characterised in that** the inner contour of the bearing cap (35) is adapted to the shape of the journal (12a, b, 23a, b) and the outer contour is adapted to the form of the recess (34).

14. Trailer coupling according to claim 11 or 12, **characterised in that** the bearing cap (35) is an inset bush (41, 42) with a socket-or ball surface (42).

## Revendications

1. Sellette de remorquage (3) pour un véhicule automobile de transport de charge, avec une plaque d'accouplement (10) et avec des moyens pour la fixation de la sellette (3) sur le châssis de véhicule, sous la forme de deux tourillons de palier (12a,b; 23a,b) qui sont réalisés latéralement sur deux emplacements diamétralement opposés au-dessous de la face supérieure de la plaque d'accouplement (10) sur la sellette (3) et sont en saillie latéralement vers l'extérieur au-dessus de la plaque d'accouplement (10), et qui présentent un tronçon de palier 16a,b) et un tronçon de fixation (15a,b), **caractérisée en ce que** chaque tourillon de palier (12a,b, 23a,b) est fixé de façon désolidarisable en au moins deux points sur la sellette (3).

2. Sellette selon la revendication 1, **caractérisée en ce que** le tronçon de fixation (15a,b) est vissé sur sa face frontale (14) libre à la sellette (3) et est maintenu en plus dans la sellette (3) au moins sur son extrémité voisine du tronçon de palier (16a,b).

3. Sellette selon la revendication 1 ou 2, **caractérisée en ce que** la longueur du tronçon de fixation (15a,b) ≥ la longueur du tronçon de palier (16a,b).

4. Sellette selon la revendication 1 ou 2, 3, **caractérisée en ce que** le tronçon de fixation (15a,b) et le tronçon de palier (16a,b) du tourillon de palier (12a,b, 23a,b) sont disposés de façon décalée l'un par rapport à l'autre.

5. Sellette selon l'une des revendications 1 à 4, **caractérisée en ce que** les tourillons de palier (12a,b, 23a,b) ont une forme cylindrique.

6. Sellette selon l'une des revendications 1 à 5, **caractérisée en ce que** les tourillons de palier (12a,b, 23a,b) portent une douille (40a,b, 41).

7. Sellette selon l'une des revendications 1 à 5, **caractérisée en ce que** les tourillons de palier (12a,b, 23a,b) portent une pièce formée par extrusion (45) présentant une surface (47) en forme de calotte ou en forme de sphère.

8. Sellette selon l'une des revendications 1 à 7, **caractérisée en ce que** les tourillons de palier (12a,b, 23a,b) ont une face frontale ronde.

9. Sellette selon l'une des revendications 1 à 8, avec un palier pour supporter le tourillon afférent de palier de la sellette, **caractérisée en ce que** la configuration du palier présente
une partie inférieure (31a,b) avec un évidement (34) se trouvant en face supérieure et au moins un élément de maintien fixé de façon désolidarisable sur la partie inférieure (31a,b).

10. Sellette selon la revendication 8, **caractérisée en ce que** l'évidement (34) est en forme de demi-cercle.

11. Sellette selon la revendication 8 ou 9, **caractérisée en ce que** l'élément de maintien est une demi-coque (32).

12. Sellette selon la revendication 8 ou 9, **caractérisée en ce que** l'élément de maintien est un capuchon de palier (35) entourant le tourillon de palier (12a,b,23a,b).

13. Sellette selon la revendication 11, **caractérisée en ce que** le contour intérieur du capuchon de palier (35) est adapté à la forme du tourillon de palier (12a,b,23,a,b) et le contour extérieur est adapté à la forme de l'évidement (34).

14. Sellette selon la revendication 11 ou 12, **caractérisée en ce que** le capuchon de palier (35) est une douille (41, 42) insérée, ayant une surface en calotte ou en sphère(42).
